# EUROPEAN PATENT APPLICATION

(11) **EP 4 213 419 A1**
(43) Date of publication of application: **19.07.2023**
(21) Application number: 21881742.7
(22) Date of filing: 03.09.2021

(54) **MAC ADDRESS ALLOCATION METHOD AND APPARATUS**

(30) Priority: 21.10.2020 CN 202011133272
(71) Applicant: Huawei Technologies Co., Ltd., Shenzhen, Guangdong 518129 (CN)
(72) Inventor: WU, Di, Shenzhen, Guangdong 518129 (CN); ZHANG, Yijiong, Shenzhen, Guangdong 518129 (CN); YANG, Zhicheng, Shenzhen, Guangdong 518129 (CN); CAO, Bin, Shenzhen, Guangdong 518129 (CN); JI, Xiang, Shenzhen, Guangdong 518129 (CN); JI, Chenhe, Shenzhen, Guangdong 518129 (CN)
(74) Representative: Maiwald GmbH
(86) International application number: PCT/CN2021/116553
(87) International publication number: WO 2022/083323

(57) **Abstract**

A media access control (MAC) address allocation method and apparatus are disclosed. The method includes: A wireless controller sends at least one MAC address to a wireless access point device. The at least one MAC address is in a MAC address pool. The MAC address pool includes a plurality of MAC addresses. The wireless controller receives a request message sent by the wireless access point device. The request message includes a first virtual MAC address of a terminal device. The first virtual MAC address is one of the at least one MAC address.

## Description

This application claims priority to Chinese Patent Application No. 202011133272.0, filed on October 21, 2020 and entitled "MAC ADDRESS ALLOCATION METHOD AND APPARATUS", which is incorporated herein by reference in its entirety.

### TECHNICAL FIELD

This application relates to the field of communication technologies, and in particular, to a media access control (MAC) address allocation method and apparatus.

### BACKGROUND

Some terminal devices use random media access control (media access control, MAC) addresses to hide real MAC addresses of the terminal devices. In other words, these terminal devices can use the random MAC addresses to access a network. However, because the MAC addresses of these terminal devices are random, MAC addresses used by different terminal devices may be the same, causing an address conflict.

### SUMMARY

This application provides a MAC address allocation method and apparatus. A MAC address in a MAC address pool may be used as a virtual MAC address of a terminal device, so that the terminal device can access a network by using the virtual MAC address, to avoid an address conflict caused by same MAC addresses of terminal devices while real MAC addresses of the terminal devices are hidden.

To achieve the foregoing objective, the following technical solutions are used in this application.

According to a first aspect, this application provides a MAC address allocation method. The method includes: A wireless controller sends at least one MAC address to a wireless access point device. The at least one MAC address is in a MAC address pool. The MAC address pool includes a plurality of MAC addresses. Subsequently, the wireless controller receives a request message sent by the wireless access point device. The request message includes a first virtual MAC address of a terminal device. The first virtual MAC address is one of the at least one MAC address.

The wireless controller sends the at least one MAC address in the MAC address pool to the wireless access point device, so that the wireless access point device sends the request message to the wireless controller based on one of the at least one MAC address, that is, the first virtual MAC address, to allocate the first virtual MAC address to the terminal device. Through the foregoing process, the MAC address in the MAC address pool is allocated to the terminal device, to reduce occurrence of same MAC addresses of different terminal devices, thereby avoiding an address conflict caused by the same MAC addresses of the terminal devices.

In a first possible implementation, the wireless controller allocates the first virtual MAC address to the terminal device in response to the request message received from the wireless access point device.

In a second possible implementation, if the first virtual MAC address is occupied, the wireless controller discards the request message received by the wireless controller.

If the first virtual MAC address in the request message received by the wireless controller is occupied, the request message is discarded, and no feedback is provided for the request message, so that the occupied MAC address is not repeatedly allocated to another terminal device, thereby avoiding an address conflict caused by the same MAC addresses of the terminal devices.

In a third possible implementation, the wireless controller allocates an unoccupied second virtual MAC address to the terminal device. The second virtual MAC address is one of the plurality of MAC addresses.

When the first virtual MAC address is occupied, the wireless controller allocates the unoccupied second virtual MAC address to the terminal device, that is, allocates the second virtual MAC address in the MAC address pool to the terminal device. The second virtual MAC address is one of the plurality of MAC addresses. Through the foregoing process, the occupied MAC address is not repeatedly allocated to the terminal device, to avoid a case in which different terminal devices have same MAC addresses and avoid an address conflict caused by the same MAC addresses of different terminal devices.

In a fourth possible implementation, if the wireless controller determines that the terminal device is disconnected from a wireless network, the wireless controller retrieves the first virtual MAC address.

Through the foregoing process, after the terminal device is disconnected from the wireless network, the wireless controller may retrieve a MAC address allocated by the wireless controller to the terminal device when the terminal device accesses the wireless network, to use the MAC address in a subsequent MAC address allocation process of another terminal device, thereby implementing repeated use of the MAC address in the same wireless network instead of repeatedly generating a MAC address allocated to the terminal device. In this way, resources are saved.

In a fifth possible implementation, the wireless controller authorizes the wireless access point device to allocate the at least one MAC address.

In a sixth possible implementation, in response to the request message, the wireless controller records that the first virtual MAC address is allocated to the terminal device.

In a seventh possible implementation, if the wireless controller determines that the terminal device is disconnected from a wireless network, the wireless controller retrieves the first virtual MAC address, and notifies the wireless access point device that the first virtual MAC address is retrieved.

In an eighth possible implementation, the plurality of MAC addresses are different from each other.

The plurality of MAC addresses in the MAC address pool stored by the wireless controller are different from each other, so that the MAC addresses allocated to the terminal devices are different from each other, which may provide assurance for avoiding an address conflict.

According to a second aspect, this application provides a MAC address allocation method. The method includes: A wireless access point device sends a notification message on a wireless medium. The notification message includes at least one candidate virtual MAC address. Subsequently, the wireless access point device receives, on the wireless medium, a request message sent by a terminal device. A source address of the request message is a first virtual MAC address. The first virtual MAC address is one of the at least one candidate virtual MAC address.

Through the foregoing process, the wireless access point device sends a MAC address in the at least one candidate virtual MAC address to the terminal device, to allocate one of the at least one candidate virtual MAC address to the terminal device and reduce occurrence of same MAC addresses of different terminal devices, thereby avoiding an address conflict caused by the same MAC addresses of the terminal devices.

In a first possible implementation, the wireless access point device allocates the first virtual MAC address to the terminal device.

In a second possible implementation, if the first virtual MAC address is occupied, the wireless access point device discards the request message received by the wireless access point device.

If the first virtual MAC address in the request message received by the wireless access point device is occupied, the wireless access point device discards the request message and provides no feedback for the request message, so that the allocated MAC address is not repeatedly allocated to another terminal device, thereby avoiding an address conflict caused by the same MAC addresses of the terminal devices.

In a third possible implementation, the wireless access point device allocates an unoccupied second virtual MAC address to the terminal device. The second virtual MAC address is one of a plurality of candidate virtual MAC addresses. The plurality of candidate virtual MAC addresses include the at least one candidate virtual MAC address.

Through the foregoing process, when the first virtual MAC address is occupied, the wireless controller allocates the unoccupied second virtual MAC address to the terminal device, to avoid a case in which different terminal devices have same MAC addresses and avoid an address conflict caused by the same MAC addresses of different terminal devices.

In a fourth possible implementation, the wireless access point device requests the wireless controller to allocate the first virtual MAC address to the terminal device.

In a fifth possible implementation, the wireless access point device responds to an indication of the wireless controller, and marks the first virtual MAC address as unoccupied.

Through the foregoing process, after the terminal device is disconnected from the wireless network, the MAC address of the terminal device may be retrieved. When the terminal device accesses the wireless network, the wireless access point device or the wireless controller allocates the MAC address to the terminal device, to use the MAC address in a subsequent MAC address allocation process of another terminal device, thereby implementing repeated use of the MAC address in the MAC address pool of the same wireless network instead of repeatedly generating a MAC address allocated to the terminal device. In this way, resources are saved.

In a sixth possible implementation, the notification message is a beacon (beacon) frame.

According to a third aspect, this application provides a MAC address allocation apparatus, to implement the method described in the first aspect. The MAC address allocation apparatus is deployed in a wireless controller. To be specific, the MAC address allocation apparatus may be a wireless controller or an apparatus that supports a wireless controller in implementing the method described in the first aspect. For example, the MAC address allocation apparatus may be deployed in a wireless controller. The apparatus may include a receiving unit and a sending unit. The sending unit is configured to send at least one MAC address to a wireless access point device. The at least one MAC address is in a MAC address pool. The MAC address pool includes a plurality of MAC addresses. The receiving unit is configured to receive a request message sent by a wireless access point device. The request message includes a first virtual MAC address of the terminal device. The virtual MAC address is one of the at least one MAC address.

In a first possible implementation, the processing unit is configured to allocate the first virtual MAC address to the terminal device in response to the request message received from the wireless access point device.

In a second possible implementation, the processing unit is further configured to: if the first virtual MAC address is occupied, discard, by the processing unit, the request message.

In a third possible implementation, the processing unit is further configured to allocate an unoccupied second virtual MAC address to the terminal device. The second virtual MAC address is one of the plurality of MAC addresses.

In a fourth possible implementation, the processing unit is further configured to: if the processing unit determines that the terminal device is disconnected from a wireless network, retrieve, by the processing unit, the first virtual MAC address.

In a fifth possible implementation, the processing unit is further configured to authorize the wireless access point device to allocate the at least one MAC address.

In a sixth possible implementation, the processing unit is further configured to: in response to the request message, record that the first virtual MAC address is allocated to the terminal device.

In a seventh possible implementation, the processing unit is further configured to: if the processing unit determines that the terminal device is disconnected from a wireless network, retrieve, by the wireless controller, the first virtual MAC address, and notify the wireless access point device that the first virtual MAC address is retrieved.

In an eighth possible implementation, the plurality of MAC addresses are different from each other.

According to a fourth aspect, this application provides a MAC address allocation apparatus. The apparatus includes a sending unit and a receiving unit. The sending unit is configured to send a notification message on a wireless medium. The notification message includes at least one candidate virtual MAC address. Subsequently, the receiving unit is configured to receive, on the wireless medium, a request message sent by a terminal device. A source address of the request message is a first virtual MAC address. The first virtual MAC address is one of the at least one candidate virtual MAC address.

In a first possible implementation, the processing unit is configured to allocate the first virtual MAC address to the terminal device.

In a second possible implementation, the processing unit is further configured to: if the first virtual MAC address is occupied, discard, by the processing unit, the received request message.

In a third possible implementation, the processing unit is further configured to allocate an unoccupied second virtual MAC address to the terminal device. The second virtual MAC address is one of a plurality of candidate virtual MAC addresses. The plurality of candidate virtual MAC addresses include the at least one candidate virtual MAC address.

In a fourth possible implementation, the processing unit is further configured to request a wireless controller to allocate the first virtual MAC address to the terminal device.

In a fifth possible implementation, the processing unit is further configured to: respond to an indication sent by the wireless controller, and mark the first virtual MAC address as unoccupied.

In a sixth possible implementation, the notification message is a beacon frame.

According to a fifth aspect, this application provides a MAC address allocation apparatus. The MAC address allocation apparatus may implement functions in the foregoing method embodiment. The functions may be implemented by using hardware, or may be implemented by hardware by executing corresponding software. The hardware or the software includes one or more modules corresponding to the functions. The MAC address allocation apparatus may exist in a product form of a chip.

According to a sixth aspect, this application provides a wireless controller. The wireless controller includes a processor and a memory. The memory is connected to the processor. The memory is configured to store computer instructions. When the processor runs the computer instructions, the wireless controller performs the MAC address allocation method described in the first aspect.

According to a seventh aspect, this application provides a wireless access point device. The wireless access point device includes a processor, a transceiver, and a memory. The processor is connected to the memory. The memory is configured to store computer instructions. The transceiver may be configured to support communication between the wireless access point device and another device. Specifically, the transceiver is configured to: send a notification message on a wireless medium, where the notification message includes at least one candidate virtual MAC address; and receive, on the wireless medium, a request message sent by a terminal device, where a source address of the request message is a first virtual MAC address, and the first virtual MAC address is one of the at least one candidate virtual MAC address. The processor is configured to: allocate the first virtual MAC address to the terminal device; if the first virtual MAC address is occupied, discard the request message; allocate an unallocated second virtual MAC address to the terminal device, where the second virtual MAC address is one of a plurality of candidate virtual MAC addresses, and the plurality of candidate virtual MAC addresses include the at least one candidate virtual MAC address; request a wireless controller to allocate the first virtual MAC address to the terminal device; and respond to an indication of the wireless controller, and mark the first virtual MAC address as unallocated. The wireless access point device may further include a memory. The memory is configured to couple to the processor. The memory stores program instructions and data that are necessary for the wireless access point device.

According to an eighth aspect, a MAC address allocation system is provided. The system includes a MAC address allocation apparatus configured to implement any possible implementation of the first aspect and a MAC address allocation apparatus configured to implement any possible implementation of the second aspect.

According to a ninth aspect, a computer-readable storage medium is provided, and includes instructions. When the instructions are run on a computer, the computer is enabled to perform the MAC address allocation method provided in any possible implementation of the first aspect or the second aspect.

According to a tenth aspect, a computer program product including instructions is provided. When the computer program product is run on a computer, the computer is enabled to perform the MAC address allocation method provided in any possible implementation of the first aspect or the second aspect.

According to an eleventh aspect, an embodiment of this application provides a chip system. The chip system includes a processor, and may further include a memory. The chip system is configured to implement functions in the MAC address allocation method provided in any possible implementation of the first aspect or the second aspect. The chip system may include a chip, or may include a chip and another discrete component.

Various possible implementations in any one of the foregoing aspects may be combined on a premise that solutions are not contradictory.

### BRIEF DESCRIPTION OF DRAWINGS

FIG. 1a is a schematic diagram of a structure of a MAC address allocation system according to this application;
FIG. 1b is a schematic diagram of a structure of another MAC address allocation system according to this application;
FIG. 2 is a schematic flowchart of interaction between apparatuses in a MAC address allocation system according to this application;
FIG. 3 is a schematic flowchart 1 of a MAC address allocation method according to this application;
FIG. 4a is a schematic diagram of a structure of a beacon frame according to this application;
   (1) in FIG. 4b is a schematic diagram of a frame structure in which an optional field carries information according to this application;

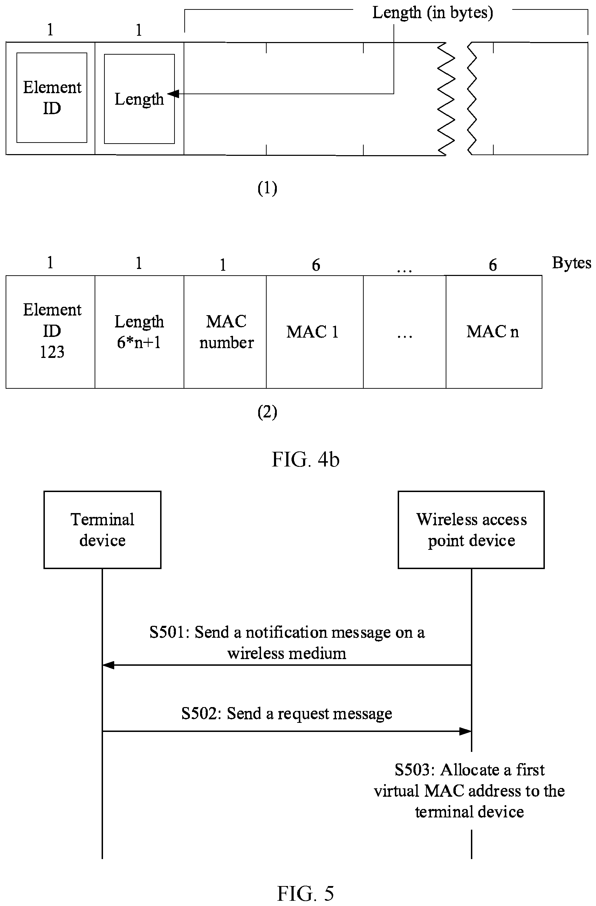

   (2) in FIG. 4b is a schematic diagram of a frame structure in which an optional field carries a MAC address according to this application;
FIG. 5 is a schematic flowchart 2 of a MAC address allocation method according to this application;

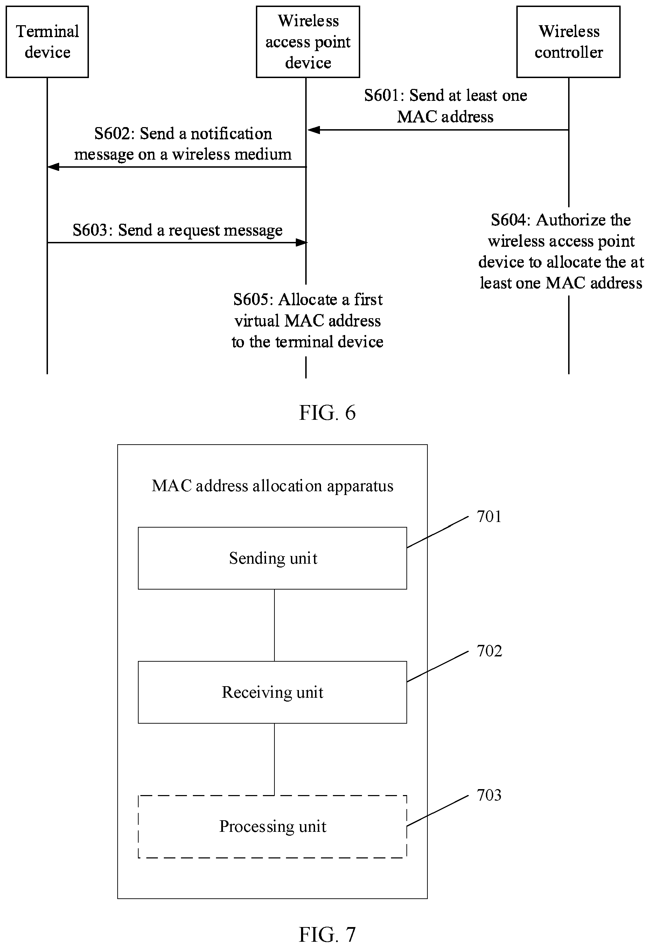

FIG. 6 is a schematic flowchart 3 of a MAC address allocation method according to this application;
FIG. 7 is a schematic diagram of composition of a MAC address allocation apparatus according to this application;

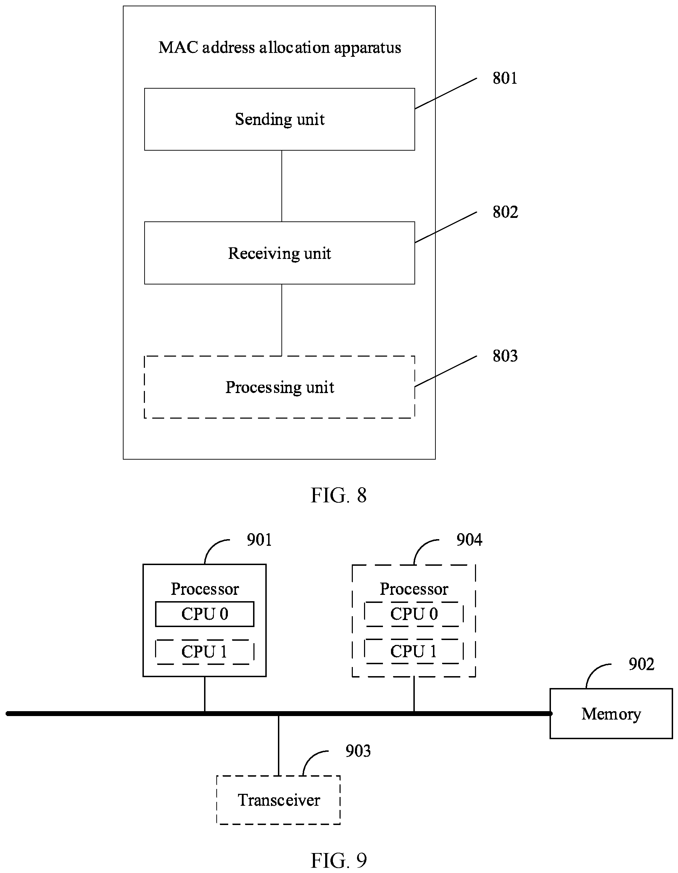

FIG. 8 is a schematic diagram of composition of another MAC address allocation apparatus according to this application; and
FIG. 9 is a schematic diagram of a hardware structure of a MAC address allocation apparatus according to this application.

### DESCRIPTION OF EMBODIMENTS

In this specification, the claims, and the accompanying drawings of this application, the terms "first", "second", "third", and the like are intended to distinguish between different objects but do not limit a particular order.

In the embodiments of this application, the word such as "for example" is used to represent giving an example, an illustration, or a description. Any embodiment or design scheme described as "for example" in the embodiments of this application should not be explained as being more preferred or having more advantages than another embodiment or design scheme. Exactly, use of words such as "for example" is intended to present a related concept in a specific manner for ease of understanding.

In the descriptions of this application, unless otherwise specified, "/" represents an "or" relationship between associated objects. For example, A/B may represent A or B. The term "and/or" in this application describes only an association relationship of associated objects and represents that three relationships may exist. For example, A and/or B may represent the following three cases: Only A exists, both A and B exist, and only B exists, where A and B may be singular or plural. In addition, in the descriptions of this application, "a plurality of" means two or more than two unless otherwise specified. At least one of the following items (pieces) or a similar expression thereof indicates any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

The following uses examples to describe a structure of a MAC address allocation system to which a method provided in this application is applied.

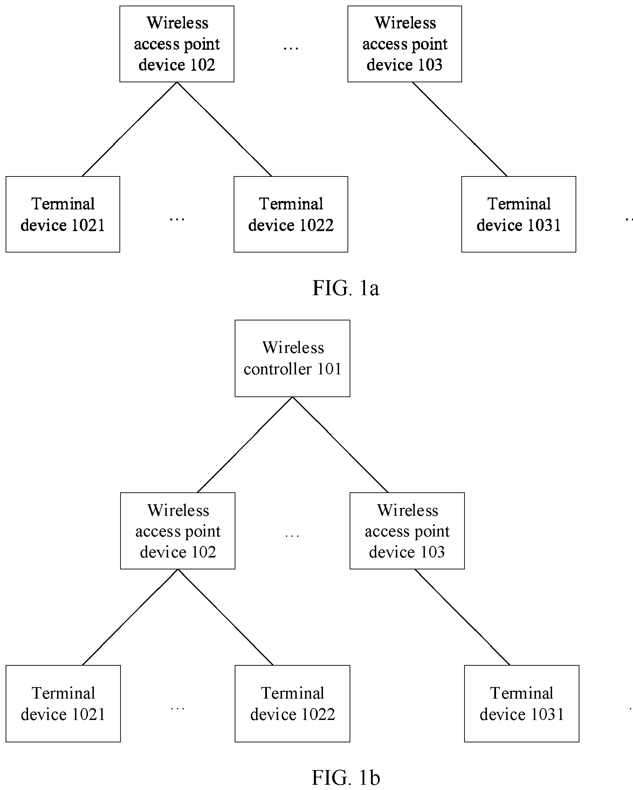

FIG. 1a shows a structure of a MAC address allocation system according to an embodiment of this application. The MAC address allocation system includes at least one wireless access point (access point, AP) device and at least one terminal device. For example, the terminal device may be a station (station, STA). The at least one wireless access point device is wirelessly connected to the terminal device. In other words, the wireless access point device communicates with the terminal device by using a wireless medium. In addition, a wireless connection may also be established between the at least one wireless access point device, to perform communication by using the wireless medium.

For example, the MAC address allocation system shown in FIG. 1a includes a wireless access point device 102, a wireless access point device 103, a terminal device 1021, a terminal device 1022, and a terminal device 1031. The wireless access point device 102 is wirelessly connected to the wireless access point device 103. The terminal device 1021 and the terminal device 1022 are wirelessly connected to the wireless access point device 102, and the terminal device 1031 is wirelessly connected to the wireless access point device 103. Herein, "..." between the wireless access point device 102 and the wireless access point device 103 indicates that the MAC address allocation system may further include another wireless access point device other than the wireless access point device 102 and the wireless access point device 103. Herein, "..." between the terminal device 1021 and the terminal device 1022 indicates that a terminal device wirelessly connected to the wireless access point device 102 may further include another terminal device other than the terminal device 1021 and the terminal device 1022, and " ..." on a side of the terminal device 1031 indicates that a terminal device communicating with the wireless access point device 103 may further include another terminal device other than the terminal device 1031.

Optionally, the MAC address allocation system shown in FIG. 1a may further include a wireless controller. In this case, a structure of the MAC address allocation system is shown in FIG. 1b. The wireless controller is connected to at least one wireless access point device. The connection may be a wired connection. The wireless controller is configured to manage the at least one wireless access point device.

For example, the MAC address allocation system shown in FIG. 1b includes a wireless controller 101, a wireless access point device 102, a wireless access point device 103, a terminal device 1021, a terminal device 1022, and a terminal device 1031. The wireless controller 101 is connected to the wireless access point device 102 and the wireless access point device 103. The wireless access point device 102 is wirelessly connected to the wireless access point device 103. The terminal device 1021 and the terminal device 1022 are wirelessly connected to the wireless access point device 102, and the terminal device 1031 is wirelessly connected to the wireless access point device 103. Herein, "..." between the wireless access point device 102 and the wireless access point device 103 indicates that an AP connected to the wireless controller 101 may further include another wireless access point device other than the wireless access point device 102 and the wireless access point device 103; "..." between the terminal device 1021 and the terminal device 1022 indicates that a terminal device wirelessly connected to the wireless access point device 102 may further include another terminal device other than the terminal device 1021 and the terminal device 1022; and "..." on a side of the terminal device 1031 indicates that a terminal device communicating with the wireless access point device 103 may further include another terminal device other than the terminal device 1031.

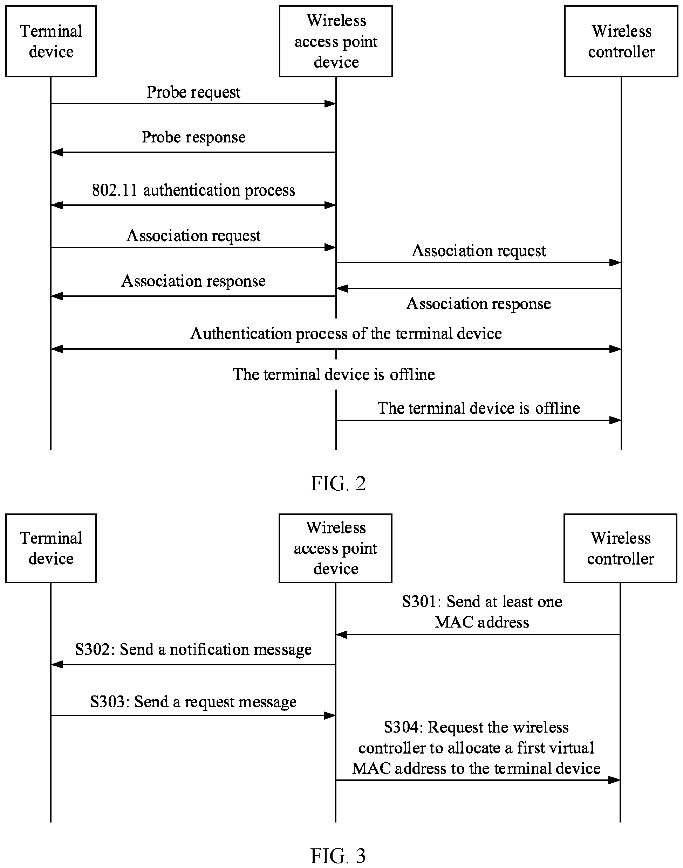

As shown in FIG. 2, the MAC address allocation system shown in FIG. 1b is used as an example. The terminal device sends a probe request (probe request) to the wireless access point device based on a MAC address of the terminal device. A source address of the probe request is the MAC address of the terminal device. The probe request is used for a wireless access point device within a specific range of a distance from the terminal device, or a wireless access point device that sends a beacon frame that can be received by the terminal device. The wireless access point device sends a probe response (probe response) to the terminal device in response to the probe request received by the wireless access point device.

Optionally, if the terminal device determines to access the wireless access point device based on the probe request and the probe response (mainly, for example, signal strength of the probe response), the wireless access point device may perform an 802.11 authentication process with the terminal device.

Optionally, after the wireless access point device receives the association request sent by the terminal device, the wireless access point device sends an association response to the terminal device in response to the association request received by the wireless access point device. In this case, an association is established between the wireless access point device and the terminal device. The wireless access point device stores information about the terminal device associated with the wireless access point device, and allocates an association identifier to the terminal device. The terminal device stores information about the wireless access point device associated with the terminal device.

Optionally, the wireless access point device sends, to the wireless controller, the association request sent by the terminal device. The wireless controller sends an association response to the wireless access point device in response to the association request received by the wireless controller, and the wireless access point device forwards the association response to the terminal device. Subsequently, an association is established between the terminal device and the wireless access point device. The wireless controller and the wireless access point device both store information about the terminal device, and allocate an association identifier to the terminal device. The terminal device stores information about the wireless access point device.

Optionally, the wireless access point device may process, based on the information about the terminal device associated with the wireless access point device, data that is sent by the terminal device and that is received by the wireless access point device. In other words, the wireless access point device processes only the data sent by the terminal device associated with the wireless access point device.

Optionally, after the association is established between the wireless access point device and the terminal device, authentication of the terminal device may be performed between the terminal device and the wireless controller, to determine whether an identity of the terminal device is valid. If the terminal device passes the authentication, the wireless controller determines that the identity of the terminal device is valid, and allows the terminal device to access a wireless network. If the terminal device does not pass the authentication, the wireless controller determines that the identity of the terminal device is invalid, and does not allow the terminal device to access a wireless network.

Any two of a first preset time period, a second preset time period, and a third preset time period may be the same or may be different.

For example, the terminal device in the embodiments of this application may be various user terminals, user apparatuses, access apparatuses, user stations, user units, mobile stations, user agents, user equipment, or other names that have a wireless communication function. The user terminal may include various handheld devices, in-vehicle devices, wearable devices, computing devices, or other processing devices connected to a wireless modem that have a wireless communication function; or various forms of user equipment (user equipment, UE), mobile stations (mobile station, MS), terminals (terminal), terminal equipment (terminal equipment), portable communication device, handheld devices, portable computing devices, entertainment devices, game devices or systems, global positioning system devices, or any other proper devices configured to perform network communication through a wireless medium.

For example, the wireless access point device in the embodiments of this application is an apparatus that is deployed in a wireless communication network to provide a wireless communication function for a terminal device or a wireless controller. The wireless access point device may be used as a hub of a communications system, and may be a communications device such as a base station, a router, a gateway, a repeater, a communications server, a switch, or a bridge. The base station may include various forms of macro base stations, micro base stations, relay stations, or the like.

It should be understood that FIG. 1a, FIG. 1b, and FIG. 2 are merely schematic diagrams, and do not constitute a limitation on an applicable scenario of the technical solutions provided in this application.

In addition, for operations, terms, and the like in the embodiments of this application, refer to each other. This is not limited. In the embodiments of this application, information, names, or the like exchanged between devices are merely an example. In a specific implementation, another name may be alternatively used. This is not limited.

To resolve a problem of an address conflict on a network side because random MAC addresses used by terminal devices may be the same, this application provides a MAC address allocation method. A wireless controller allocates a MAC address to the terminal device, or a wireless access point device allocates a MAC address to the terminal device. The following describes the MAC address allocation method separately in the two cases with reference to Embodiment 1 and Embodiment 2. Details are as follows:

### Embodiment 1

In this embodiment, the wireless controller allocates the MAC address to the terminal device. This embodiment is applied to the MAC address allocation system shown in FIG. 1b. As shown in FIG. 3, the MAC address allocation method includes steps S301 to S304.

S301: The wireless controller sends at least one MAC address to a wireless access point device.

Correspondingly, the wireless access point device receives the at least one MAC address sent by the wireless controller.

The at least one MAC address is in a MAC address pool. The MAC address pool includes a plurality of MAC addresses.

When a random MAC address is determined based on a real MAC address of the terminal device and a MAC address randomization algorithm, if the MAC address randomization algorithm used to determine the random MAC address has a vulnerability, the real MAC address of the terminal device may be exposed in a process in which the terminal device accesses the network by using the random MAC address, causing privacy leakage of a user.

Therefore, in a possible implementation, the wireless controller may directly generate, by using a preset algorithm, the plurality of MAC addresses in the MAC address pool that can be allocated to the terminal device. Alternatively, the MAC address pool that includes the plurality of MAC addresses is manually configured, and the plurality of MAC addresses in the MAC address pool that can be allocated to the terminal device are determined without participation of the real MAC address of the terminal device. In this way, leakage of the real MAC address of the terminal device in a process of connecting the terminal device to a wireless network is avoided, thereby ensuring privacy of a user holding the terminal device.

Specifically, the MAC address pool stores a MAC address segment that may indicate a plurality of MAC addresses. A quantity of MAC address segments is one or more. Each MAC address segment includes a start MAC address and an end MAC address, and is used to indicate all MAC addresses from the start MAC address to the end MAC address. The plurality of MAC addresses indicated by the MAC address segment in the MAC address pool may be stored on a device such as a server. Alternatively, if a quantity of the plurality of MAC addresses indicated by the MAC address segment in the MAC address pool is less than a preset quantity threshold, the MAC address pool may directly store the plurality of MAC addresses.

For example, the MAC address is a binary number with a length of 48 bits (that is, 6 bytes), and the wireless controller generates the MAC address pool according to a preset algorithm. In this case, the MAC address pool may include a MAC address segment used to indicate a plurality of MAC addresses from 00-00-00-00-00-00 to FF-FF-FF-FF-FF-FF.

In a possible implementation, the plurality of MAC addresses in the MAC address pool are different from each other. In this case, when the wireless controller allocates the MAC address to the terminal device by using the MAC address pool that includes the plurality of MAC addresses, a case of allocating the same MAC address to different terminal devices may be avoided, thereby avoiding an address conflict caused because the same MAC addresses are allocated to different terminal devices.

Optionally, the wireless controller may send, to all wireless access point devices managed by the wireless controller, the at least one MAC address in the MAC address pool that includes the plurality of MAC addresses.

In a possible implementation, the wireless controller sends, to the wireless access point device, an address segment that can indicate the at least one MAC address, so that the wireless access point device can obtain the at least one MAC address based on the received address segment. Alternatively, the wireless controller may directly send at least one of the plurality of MAC addresses to the wireless access point device. At least one MAC address sent by the wireless controller to different wireless access point devices may be the same or may be different.

For example, the MAC address pool includes the address segment indicating the plurality of MAC addresses from 00-00-00-00-00-00 to FF-FF-FF-FF-FF-FF. The wireless controller sends, to all wireless access point devices or at least one wireless access point device managed by the wireless controller, the address segment indicating the plurality of MAC addresses from 00-00-00-00-00-00 to FF-FF-FF-FF-FF-FF.

For example, the MAC address pool includes the address segment indicating the plurality of MAC addresses from 00-00-00-00-00-00 to FF-FF-FF-FF-FF-FF. The wireless access point devices managed by the wireless controller include a wireless access point device 1, a wireless access point device 2, and a wireless access point device 3. The wireless controller sends, to the wireless access point device 1, the wireless access point device 2, and the wireless access point device 3, an address segment indicating MAC addresses from 00-00-00-00-00-00 to 11-11-11-11-11-11. Alternatively, the wireless controller sends, to the wireless access point device 1, an address segment indicating MAC addresses from 00-00-00-00-00-00 to 11-11-11-11-11-11; the wireless controller sends, to the wireless access point device 2, MAC addresses from 11-11-11-11-11-11 to 22-22-22-22-22-22; and the wireless controller sends, to the wireless access point device 3, an address segment indicating MAC addresses from 22-22-22-22-22-22 to 33-33-33-33-33-33.

In a possible implementation, the wireless controller may periodically send the at least one MAC address to the wireless access point device, or may aperiodically send the at least one MAC address to the wireless access point device. For example, after allocating the at least one MAC address to the terminal device, the wireless controller may send at least one of unallocated MAC addresses in the MAC address pool to the wireless access point device.

In another possible implementation, the at least one MAC address obtained by the wireless access point device is generated by the wireless access point device according to a preset algorithm, or is manually configured by a user.

S302: The wireless access point device sends a notification message on a wireless medium to the terminal device.

Correspondingly, the terminal device receives the notification message that is sent on the wireless medium by the wireless access point device. In other words, the terminal device receives, on the wireless medium, the notification message sent by the wireless access point device.

The notification message includes at least one candidate virtual MAC address. The at least one candidate virtual MAC address is at least one of the at least one MAC address obtained by the wireless access point device in step S301. For example, the notification message includes one to five candidate virtual MAC addresses.

For example, the wireless access point device receives the at least one MAC address, and the at least one MAC address includes MAC 1, MAC 2, and MAC 3. Subsequently, the wireless access point device uses a part of MAC addresses received by the wireless access point device, for example, at least one of MAC 1, MAC 2, and MAC 3, as a candidate virtual MAC address; and sends the candidate virtual MAC address to the terminal device by using the notification message.

Optionally, the notification message sent by the wireless controller to the wireless access point device is a beacon frame. The beacon frame carries the at least one candidate virtual MAC address sent to the terminal device.

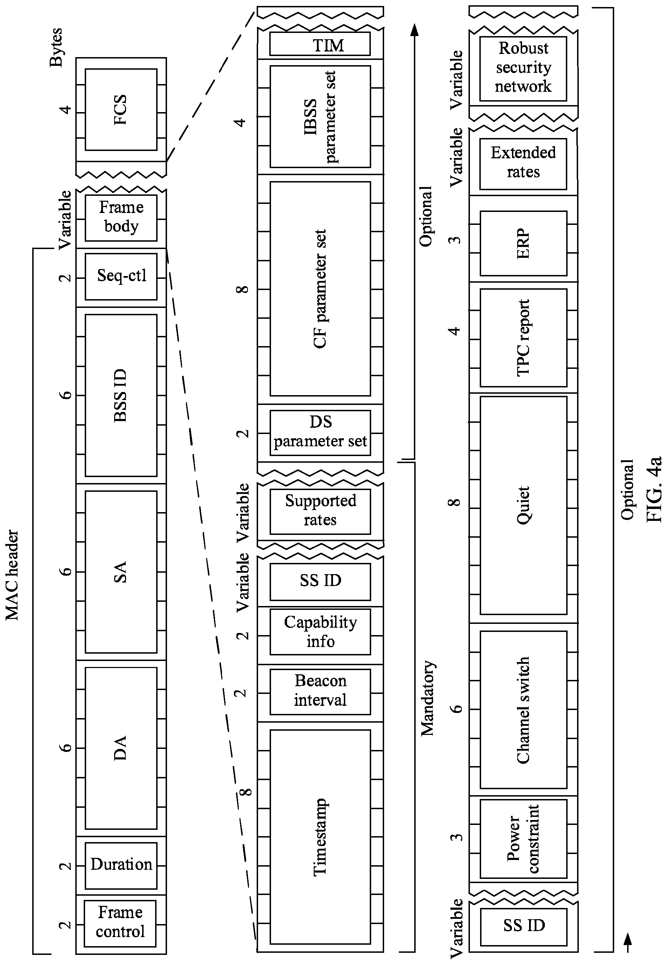

For example, a format of the beacon frame is shown in FIG. 4a. In FIG. 4a, the beacon frame includes a MAC frame header (header) field, a frame body (frame body) field (a number of bytes is a variable), and a frame check sequence FCS field. The frame body field includes a mandatory (mandatory) field and an optional (optional) field. The MAC frame header field includes a frame control (frame control) field (2 bytes), a duration (duration) field (2 bytes), a destination address (destination address, DA) field (6 bytes), a source address (source address) field (6 bytes), a basic service set identifier (basic service set identity, BSS ID) field (6 bytes), and a sequence control (sequence control, seq-ctl) field (2 bytes). The mandatory field includes a time stamp (time stamp) field (8 bytes), a beacon interval (beacon interval) field, a capability information (capability info) field (2 bytes), a service set identifier (service set identifier, SS ID) field (a number of bytes is a variable), and a supported rate (supported rates) field (a number of bytes is a variable). The optional field includes a direct sequence parameter set (DS parameter set) field (2 bytes), a contention-free parameter set (CF parameter set) field (8 bytes), an independent basic service IBSS parameter set (IBSS parameter set) field (4 bytes), and a traffic indication map (traffic indication map, TIM) field (a number of bytes is a variable). Herein, optional (continued) indicates that the optional field further includes a country information (country info) field (a number of bytes is a variable), a power constraint (power constraint) field (a number of bytes is 3), a channel switch (channel switch) field (6 bytes), a quiet (quiet) field, a transmit power control report (TPC report) field (4 bytes), an extended rate physical layer (extended rate PHY, ERP) field (3 bytes), and an extended rate (extended rates) field (a number of bytes is a variable), a robust security network (robust security network, RSN) field (a number of bytes is a variable), and the like.

For example, a field included in the optional field, that is, a management frame information element (management frame information elements) may store information in a form shown in (1) in FIG. 4b. As shown in (1) in FIG. 4b, the management frame information element includes an element identifier (element ID) (1 byte), a byte length (length in bytes) (1 byte) of information carried in an element, information carried in the element, and the like.

For example, one management frame information element in the optional field is shown in (2) in FIG. 4b. The management frame information element carries the at least one candidate virtual MAC address sent to the terminal device. The element identifier in the management frame information element is 123. The byte length of the information carried in the management frame information element is 6*n+1 bytes (n is a positive integer greater than or equal to 1). The information carried in the management frame information element includes at least one candidate virtual MAC address: MAC 1-MAC n and a quantity of the at least one candidate virtual MAC address. Each MAC address occupies 6 bytes. The quantity of the at least one candidate virtual MAC address occupies 1 byte.

In a possible implementation, the wireless access point device may periodically send the notification message to the terminal device, or may aperiodically send the notification message to the terminal device.

S303: The terminal device sends a request message to the wireless access point device.

Specifically, the terminal device sends the request message on the wireless medium to the wireless access point device.

Correspondingly, the wireless access point device receives the request message that is sent on the wireless medium by the terminal device. In other words, the wireless access point device receives, on the wireless medium, the request message sent by the terminal device. The request message includes a first virtual MAC address of the terminal device. The first virtual MAC address is any one of the at least one candidate virtual MAC address sent to the terminal device.

Specifically, the terminal device determines, as the first virtual MAC address of the terminal device based on the notification message received by the terminal device from the wireless access point device, any one of the at least one candidate virtual MAC address included in the notification message; and generates the request message by using the first virtual MAC address as a source address. Then, the terminal device sends, to the wireless access point device, the request message generated by the terminal device.

For example, the wireless access point device receives the at least one MAC address, and the at least one MAC address includes MAC 1, MAC 2, and MAC 3. Then, the wireless access point device sends the at least one candidate virtual MAC address, that is, MAC 1, MAC 2, and MAC 3 to the terminal device by using the notification message. Based on the notification message received by the terminal device, the terminal device determines MAC 1 or MAC 2 or MAC 3 as the first virtual MAC address of the terminal device, and generates the request message by using the first virtual MAC address as the source address.

For example, the request message may be an association request, and is used to request to establish an association between the wireless access point device and the terminal device.

S304: The wireless access point device requests the wireless controller to allocate the first virtual MAC address to the terminal device.

Optionally, the wireless access point device sends, to the wireless controller, the request message received by the wireless access point device, to request the wireless controller to allocate the first virtual MAC address included in the request message to the terminal device, that is, record the MAC address. Correspondingly, the wireless controller receives the request message sent by the wireless access point device. The request message may be an association request, and is used to request to establish an association between the terminal device and the wireless access point device. Then, the wireless controller allocates the first virtual MAC address to the terminal device in response to the request message.

In a possible implementation, after the wireless controller receives the request message, if the first virtual MAC address in the request message is not occupied, the wireless controller allocates the first virtual MAC address to the terminal device; or if the first virtual MAC address in the request message is occupied, that is, the first virtual MAC address is allocated to another terminal device, the wireless controller discards the request message.

In a possible implementation, if the first virtual MAC address in the request message received by the wireless controller is occupied, the wireless controller allocates, to the terminal device, a second virtual MAC address that is not occupied (that is, not allocated). The second virtual MAC address is one of the plurality of MAC addresses in the MAC address pool.

For example, the MAC address pool includes three MAC addresses, and the three MAC addresses are respectively MAC 1, MAC 2, and MAC 3. The source address of the request message that is sent by the terminal device to the wireless controller through the wireless access point device is MAC 1. In other words, the first virtual MAC address of the terminal device is MAC 1. If MAC 1 is not occupied, the wireless controller allocates MAC 1 to the terminal device. In this case, the MAC address that is used by the terminal device to access the wireless network is MAC 1. If MAC 1 is occupied, the wireless controller discards the request message received by the wireless controller, uses, as the second virtual MAC address, MAC 2 or MAC 3 that is not allocated to another terminal device, and allocates the second virtual MAC address to the terminal device.

Optionally, after allocating the first virtual MAC address or the second virtual MAC address to the terminal device, that is, after recording the first virtual MAC address or the second virtual MAC address, the wireless controller notifies the wireless access point device that the first virtual MAC address or the second virtual MAC address is allocated to the terminal device, so that the wireless access point device records the first virtual MAC address or the second virtual MAC address.

In another possible implementation, if the first virtual MAC address is occupied, the wireless controller indicates the terminal device to change the first virtual MAC address of the terminal device. Then, the terminal device changes the first virtual MAC address of the terminal device, and sends, to the wireless access point device, a request message that is generated by the terminal device based on a changed first virtual MAC address. The wireless access point device sends the request message to the wireless controller, to request the wireless controller to allocate the changed first virtual MAC address to the terminal device.

For example, the MAC address pool includes three MAC addresses, and the three MAC addresses are respectively MAC 1, MAC 2, and MAC 3. The notification message sent by the wireless access point device to the terminal device carries two candidate virtual MAC addresses. The two candidate virtual MAC addresses are respectively MAC 1 and MAC 2. The terminal device uses MAC 1 as the first virtual MAC address and a source address, and sends the request message to the wireless controller through the wireless access point device. If MAC 1 is not occupied, the wireless controller allocates MAC 1 to the terminal device. In this case, the MAC address that is used by the terminal device to access the wireless network is MAC 1. If MAC 1 is occupied, the wireless controller indicates the terminal device to change the first virtual MAC address of the terminal device. In response to the indication, the terminal device changes the first virtual MAC address of the terminal device to MAC 2. In other words, the terminal device uses MAC 2 as a source address, and sends the request message to the wireless controller. If MAC 2 is not occupied, the wireless controller allocates the changed first virtual MAC address: MAC 2 to the terminal device.

In a possible implementation, the wireless access point device sends the request message to the wireless controller. If the wireless access point device does not receive, within a fourth preset time period after the wireless access point device sends the request message, a request response or an indication sent by the wireless controller, the wireless access point device indicates the terminal device to resend the request message. If the wireless access point device still does not receive, within the fourth preset time period after the wireless access point device resends the request message, a response or an indication sent by the wireless controller, the wireless access point device may indicate the terminal device to change the first virtual MAC address of the terminal device. The wireless access point device may resend the request message for one or more times.

In another possible implementation, the wireless access point device sends the request message to the wireless controller. If the wireless access point device does not receive, within a fifth preset time period after the wireless access point device sends the request message, a request response or an indication sent by the wireless controller, the wireless access point device directly indicates the terminal device to change the first virtual MAC address of the terminal device. Then, the terminal device changes the first virtual MAC address of the terminal device in response to the indication of the wireless access point device, and newly generates a request message based on the changed first virtual MAC address. Finally, the wireless access point device receives the newly generated request message sent by the terminal device, and sends the request message to the wireless controller, to request the wireless controller to allocate the changed first virtual MAC address to the terminal device.

Any two of the first preset time period to the fifth preset time period may be the same, or may be different.

In another possible implementation, the terminal device sends the request message to the wireless access point device. If the terminal device does not receive, within a sixth preset time period after the terminal device sends the request message, a message sent by the wireless controller or the wireless access point device, the terminal device resends the request message to the wireless access point device. If the terminal device still does not receive, within the sixth preset time period after the terminal device resends the request message, a message sent by the wireless controller or the wireless access point device, the terminal device changes the first virtual MAC address of the terminal device. The terminal device resends the request message for one or more times. Any two of the first preset time period to the sixth preset time period may be the same, or may be different.

In another possible implementation, the terminal device sends the request message to the wireless access point device. If the terminal device does not receive, within a seventh preset time period, a message sent by the wireless controller or the wireless access point device, the terminal device directly changes the first virtual MAC address of the terminal device, and resends a request message to the wireless controller by using the changed first virtual MAC address as the source address. Any two of the first preset time period to the seventh preset time period may be the same, or may be different.

In a possible implementation, after allocating the first virtual MAC address to the terminal device, the wireless controller does not further send the first virtual MAC address to the wireless access point device. In other words, the at least one MAC address sent by the wireless controller to the wireless access point device is a MAC address that is not occupied at a current moment.

Optionally, after the wireless controller allocates the first virtual MAC address to the terminal device, if the wireless controller determines that the terminal device is disconnected from a wireless network, the wireless controller retrieves the first virtual MAC address, that is, marks the first virtual MAC address as unoccupied. In this case, the wireless controller may send the first virtual MAC address to the wireless access point device, and may allocate the first virtual MAC address to another terminal device.

Through the foregoing process, the wireless controller may use the plurality of addresses in the MAC address pool of the wireless controller to provide the terminal device with a MAC address that can be allocated to the terminal device. In this way, the following problem is resolved: An address conflict occurs on a network side because MAC addresses used by terminal devices are the same and the MAC addresses of the terminal devices are the same. In addition, the plurality of MAC addresses in the MAC address pool are different from each other, to better avoid the problem of the address conflict on the network side.

### Embodiment 2

In this embodiment, a wireless access point device allocates a MAC address to a terminal device. This embodiment is applied to the MAC address allocation system shown in FIG. 1a or FIG. 1b. The following separately describes a case in which this embodiment is applied to the MAC address allocation system shown in FIG. 1a or a case in which this embodiment is applied to the MAC address allocation system shown in FIG. 1b.

### Case 1:

This embodiment is applied to the MAC address allocation system shown in FIG. 1a. As shown in FIG. 5, the MAC address allocation method includes steps S501 to S503.

S501: The wireless access point device sends a notification message on a wireless medium to the terminal device.

Correspondingly, the terminal device receives the notification message that is sent on the wireless medium by the wireless access point device. In other words, the terminal device receives, on the wireless medium, the notification message sent by the wireless access point device. The notification message includes at least one candidate virtual MAC address. A plurality of candidate virtual MAC addresses include the at least one candidate virtual MAC address.

Optionally, the wireless access point device obtains the at least one MAC address, and then the wireless access point device sends the notification message to the terminal device.

The at least one MAC address is obtained by the wireless access point device from another device (for example, a server), or the at least one MAC address is directly generated by the wireless access point device according to a preset algorithm, or the at least one MAC address is manually configured by a user. In addition, MAC addresses obtained by all wireless access point devices may form a MAC address pool, and the MAC address pool includes a plurality of candidate virtual MAC addresses, that is, the MAC addresses obtained by all the wireless access point devices.

For a specific description of the notification message in step S501, refer to the description in Embodiment 1. Details are not described herein again.

S502: The terminal device sends a request message to the wireless access point device.

Optionally, the terminal device sends the request message on the wireless medium to the wireless access point device. Correspondingly, the wireless access point device receives the request message sent by the terminal device. Specifically, the wireless access point device receives, on the wireless medium, the request message sent by the terminal device.

For a specific implementation in which the terminal device generates the request message based on the received notification message in step S502, refer to the description in Embodiment 1. Details are not described herein again.

S503: The wireless access point device allocates a first virtual MAC address to the terminal device.

Optionally, in response to the request message received by the wireless access point device, the wireless access point device allocates a source address in the request message, that is, the first virtual MAC address of the terminal device, to the terminal device, and sends a request response to the terminal device.

In a possible implementation, if the first virtual MAC address in the request message received by the wireless access point device is not occupied, the wireless access point device allocates the first virtual MAC address to the terminal device. In other words, the wireless access point device records the first virtual MAC address. If the first virtual MAC address in the request message received by the wireless access point device is occupied, the wireless access point device discards the request message received by the wireless access point device from the terminal device.

In a possible implementation, if the first virtual MAC address in the request message received by the wireless access point device is occupied, the wireless access point device discards the request message, and then allocates an unoccupied second virtual MAC address to the terminal device. In this case, the wireless access point device records the second virtual MAC address. The second virtual MAC address is one of the at least one MAC address obtained by the wireless access point device, or the second virtual MAC address is one of the plurality of candidate virtual MAC addresses. For a description of the plurality of candidate virtual MAC addresses, refer to the foregoing content. Details are not described herein again.

In another possible implementation, if the first virtual MAC address in the request message received by the wireless access point device is occupied, the wireless access point device discards the request message, and then indicates the terminal device to change the first virtual MAC address of the terminal device. Then, the terminal device changes the first virtual MAC address of the terminal device in response to the indication of the wireless access point device, and sends, to the wireless access point device, a request message that is newly generated by the terminal device based on a changed first virtual MAC address, to request the wireless access point device to allocate the changed first virtual MAC address to the terminal device. If the first virtual MAC address in the request message newly received by the wireless access point device is not occupied, the wireless access point device allocates the first virtual MAC address to the terminal device sending the request message.

In another possible implementation, the terminal device sends the request message to the wireless access point device. If the terminal device does not receive a request response of the wireless access point device within an eleventh preset time period after the terminal device sends the request message, the terminal device resends the request message to the wireless access point device. If the terminal device still does not receive, within the eleventh preset time period after the terminal device resends the request message, a request response sent by the wireless access point device, the terminal device changes the first virtual MAC address of the terminal device. The terminal device resends the request message for at least one time.

Any two of the first preset time period to the eleventh preset time period may be the same, or may be different.

In another possible implementation, the terminal device sends the request message to the wireless access point device. If the terminal device does not receive a request response of the wireless access point device within a twelfth preset time period after the terminal device sends the request message, the terminal device directly changes the first virtual MAC address of the terminal device, and sends a request message to the wireless access point device by using a changed first virtual MAC address as the source address.

Optionally, after the wireless access point device allocates the first virtual MAC address to the terminal device, if the terminal device is disconnected from a wireless network, that is, the terminal device is offline, the wireless access point device retrieves the first virtual MAC address. In this case, the wireless access point device may newly allocate the first virtual MAC address to another terminal device.

In a possible implementation, when the terminal device is disconnected from the wireless network, the terminal device sends an offline message to a wireless access point device associated with the terminal device. Because the terminal device is movable, the wireless access point device associated with the terminal device when the terminal device is disconnected from the wireless network may be not a wireless access point device that allocates a MAC address to the terminal device. If the wireless access point device is the wireless access point device that allocates the MAC address to the terminal device, the wireless access point device retrieves, based on the received offline message, the MAC address allocated to the terminal device. If the wireless access point device is not the wireless access point device that allocates the MAC address to the terminal device, the wireless access point device may communicate with the wireless access point terminal device that allocates the MAC address to the terminal device, to notify the wireless access point device allocating the MAC address to the terminal device that the terminal device is offline. In this case, the wireless access point device that allocates the MAC address to the terminal device retrieves the first virtual MAC address allocated to the terminal device.

Through the foregoing process, the wireless access point device may use the at least one MAC address obtained by the wireless access point device to provide the terminal device with a MAC address that can be allocated to the terminal device. In this way, the following problem is resolved: An address conflict occurs on a network side because MAC addresses used by terminal devices are the same and the MAC addresses of the terminal devices are the same.

### Case 2:

This embodiment is applied to the MAC address allocation system shown in FIG. 1b. As shown in FIG. 6, the MAC address allocation method includes steps S601 to S605.

S601: The wireless controller sends at least one MAC address to the wireless access point device.

S602: The wireless access point device sends a notification message on a wireless medium to the terminal device.

S603: The terminal device sends a request message to the wireless access point device.

For detailed descriptions of step S601 to step S603, refer to step S301 to step S303 in Embodiment 1. Details are not described herein again. It should be noted that the wireless access point device may also obtain the at least one MAC address in the manner provided in step S501 in Case 1.

S604: The wireless controller authorizes the wireless access point device to allocate the at least one MAC address.

Optionally, at least one wireless access point device sends a request to the wireless controller, so that the wireless controller can respond to the request and authorize the at least one wireless access point device to allocate at least one MAC address obtained by the at least one wireless access point device. Alternatively, the wireless controller directly authorizes at least one wireless access point device to allocate at least one MAC address received by the at least one wireless access point device. Then, the wireless access point device allocates a MAC address to the terminal device.

It should be noted that step S604 is performed before step S605.

S605: The wireless access point device allocates a first virtual MAC address to the terminal device.

Optionally, after step S602, the wireless access point device may allocate the MAC address to the terminal device. Therefore, in response to the request message received by the wireless access point device, the wireless access point device may allocate the first virtual MAC address in the request message to the terminal device.

For a specific implementation in which the wireless access point device allocates the MAC address to the terminal device in this step, refer to step S503. Details are not described herein again.

Optionally, after allocating the first virtual MAC address or a second virtual MAC address to the terminal device, the wireless access point device notifies the wireless controller, so that the wireless controller records the first virtual MAC address or the second virtual MAC address.

The wireless access point device determines, based on an indication of the wireless controller, whether to retrieve the MAC address allocated by the wireless access point device to the terminal device.

The wireless controller determines, based on a terminal device disassociation notification received by the wireless controller from the wireless access point device, whether the terminal device is offline. For example, after receiving a terminal device disassociation notification from one wireless access point device, the wireless controller quickly learns from another wireless access point device that the terminal device is associated with a new wireless access point device; or before receiving a terminal device disassociation notification from one wireless access point device, the wireless controller learns from another wireless access point device that the terminal device is associated with a new wireless access point device. In this case, it is considered that the terminal device is not offline. If the wireless controller does not receive a terminal device re-association message for a long time after receiving a terminal device disassociation notification from a wireless access point device, the wireless controller determines that the terminal device is offline. After the terminal device is offline, the wireless controller marks the MAC address allocated to the terminal device as unoccupied, and indicate, to retrieve the MAC address, the wireless access point device that allocates the MAC address to the terminal device. The wireless access point device may send a disassociation notification based on a disassociation frame or a deauthentication frame of the terminal device, or may send a disassociation notification based on a fact that a radio frame is not received from the terminal device for a long time.

Through the foregoing process, the wireless access point device may use the at least one MAC address obtained by the wireless access point device to provide the terminal device with a MAC address that can be allocated to the terminal device. In this way, the following problem is resolved: An address conflict occurs on a network side because MAC addresses used by terminal devices are the same and the MAC addresses of the terminal devices are the same.

The foregoing mainly describes the solutions provided in the embodiments of this application from a perspective of a working principle of a MAC address allocation apparatus (for example, the wireless controller or the wireless access point device). It may be understood that, to implement the foregoing functions, the foregoing MAC address allocation apparatus includes corresponding hardware structures and/or software modules for performing each function. A person skilled in the art should easily be aware that, in combination with units and algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the MAC address allocation apparatus may be divided into function modules based on the foregoing method examples. For example, the function modules may be obtained through division based on corresponding functions, or two or more functions may be integrated into one processing module. The integrated module may be implemented in a form of hardware, or may be implemented in a form of a software function module. In this embodiment of this application, module division is an example, and is merely a logical function division. In actual implementation, another division manner may be used.

When the function modules are obtained through division based on the corresponding functions, FIG. 7 is a schematic diagram of composition of a MAC address allocation apparatus. The MAC address allocation apparatus includes a sending unit 701 and a receiving unit 702. Optionally, the MAC address allocation apparatus further includes a processing unit 703. Optionally, the MAC address allocation apparatus further includes a storage unit 704. Certainly, the MAC address allocation apparatus may further include other modules, or the MAC address allocation apparatus may include fewer modules. The schematic diagram shown in FIG. 7 may be specifically used to illustrate a structure of the wireless controller in the foregoing embodiments.

The sending unit 701 is configured to send at least one MAC address to a wireless access point device. The at least one MAC address is in a MAC address pool. The MAC address pool includes a plurality of MAC addresses.

In a possible implementation, the plurality of MAC addresses are different from each other.

The receiving unit 702 is configured to receive a request message sent by the wireless access point device. A source address of the request message is a first virtual MAC address. The first virtual MAC address is one of the at least one MAC address.

The apparatus further includes the processing unit 703, configured to allocate the first virtual MAC address to a terminal device in response to the request message received by the receiving unit 702.

Optionally, if the first virtual MAC address is occupied, the processing unit 703 is further configured to discard the request message.

In a possible implementation, the processing unit 703 is further configured to allocate an unoccupied second virtual MAC address to the terminal device. The second virtual MAC address is one of the plurality of MAC addresses in the MAC address pool.

In another possible implementation, if the terminal device is disconnected from a wireless network, the processing unit 703 is further configured to retrieve the first virtual MAC address allocated to the terminal device.

Optionally, the processing unit 703 is further configured to authorize the wireless access point device to allocate the at least one MAC address.

In a possible implementation, the processing unit 703 is further configured to: in response to the received request message, record that the first virtual MAC address is allocated to the terminal device.

In another possible implementation, if it is determined that the terminal device is disconnected from a wireless network, the processing unit 703 is further configured to: retrieve the first virtual MAC address, and notify the wireless access point device that the first virtual MAC address is retrieved.

When the function modules are obtained through division based on the corresponding functions, FIG. 8 is a schematic diagram of composition of another MAC address allocation apparatus. The MAC address allocation apparatus includes a sending unit 801 and a receiving unit 802. Optionally, the MAC address allocation apparatus further includes a processing unit 803. Optionally, the MAC address allocation apparatus further includes a storage unit 804. Certainly, the MAC address allocation apparatus may further include other modules, or the MAC address allocation apparatus may include fewer modules. The schematic diagram shown in FIG. 8 may be specifically used to illustrate a structure of the wireless access point device in the foregoing embodiments.

The sending unit 801 is configured to send a notification message on a wireless medium. The notification message includes at least one candidate virtual MAC address. The notification message is a beacon frame.

The receiving unit 802 is configured to receive, on the wireless medium, a request message sent by a terminal device. A source address of the request message is a first virtual MAC address. The first virtual MAC address is one of the at least one candidate virtual MAC address.

Optionally, the apparatus further includes the processing unit 803, configured to allocate the first virtual MAC address to the terminal device.

In a possible implementation, if the first virtual MAC address is occupied, the processing unit 803 discards the request message received by the receiving unit 802.

In another possible implementation, the processing unit 803 is further configured to allocate an unoccupied second virtual MAC address to the terminal device. The second virtual MAC address is one of a plurality of candidate virtual MAC addresses. The plurality of candidate virtual MAC addresses include the at least one candidate virtual MAC address. The plurality of candidate virtual MAC addresses are MAC addresses in a MAC address pool.

In another possible implementation, the processing unit 803 is further configured to request a wireless controller to allocate the first virtual MAC address to the terminal device.

In another possible implementation, the processing unit 803 is further configured to: respond to an indication of the wireless controller, and mark the first virtual MAC address as unoccupied.

FIG. 9 is a schematic diagram of a hardware structure of a MAC address allocation apparatus according to an embodiment of this application. The MAC address allocation apparatus is applicable to the MAC address allocation system shown in FIG. 1a or FIG. 1b, and performs functions of the wireless access point device or the wireless controller in the MAC address allocation method shown in FIG. 3, FIG. 5, or FIG. 6.

The memory 902 is coupled to the processor 901. The memory 902 may include a ROM and a RAM, and provide operation instructions and data to the processor 901. The memory 902 may further include a non-volatile memory.

In this embodiment of this application, the MAC address allocation apparatus performs corresponding operations through invoking operation instructions stored in the memory 902 (the operation instructions may be stored in an operating system).

The processor 901 may be an integrated circuit chip and has a signal processing capability. The processor 901 may also be referred to as a central processing unit (central processing unit, CPU). In an implementation process, the steps in the foregoing MAC address allocation method may be implemented by using a hardware integrated logic circuit in the processor 901, or by using instructions in a form of software.

In a specific implementation, in an embodiment, the processor 901 may include one or more CPUs, for example, a CPU 0 and a CPU 1 shown in FIG. 9.

In specific implementation, in an embodiment, the MAC address allocation apparatus may alternatively include a plurality of processors, for example, a processor 901 and a processor 904 shown in FIG. 9. Each of the processors may be a single-core processor, or may be a multi-core processor. The processor herein may be one or more communications devices, circuits, and/or processing cores configured to process data (for example, computer program instructions).

Optionally, the MAC address allocation apparatus further includes a transceiver 903. The processor 901, the transceiver 903, and the memory 902 are coupled together through a line. Information may be transmitted, through the line, between components included in the MAC address allocation apparatus. The transceiver 903 is configured to communicate with another apparatus. For example, the MAC address allocation apparatus is a wireless access point device, and the transceiver 903 may be configured to communicate with a terminal device or a wireless controller. In addition, the transceiver 903 may include a receiver and a transmitter (not shown in FIG. 9). The receiver is configured to implement a receiving function, and the transmitter is configured to implement a sending function. The transceiver 903 may be integrated with the processor 901, or may exist independently and is coupled to the processor 901 through an input/output port (not shown in FIG. 9) of the MAC address allocation apparatus. This is not specifically limited in this embodiment of this application.

It should be noted that a structure of the MAC address allocation apparatus shown in FIG. 9 does not constitute a limitation on the communications apparatus. An actual MAC address allocation apparatus may include more or fewer components than those shown in the figure, or combine some components, or have different component arrangements.

In addition, for technical effect of the MAC address allocation apparatus 9 shown in FIG. 9, refer to technical effect of the MAC address allocation methods shown in FIG. 3, FIG. 5, and FIG. 6. Details are not described herein again.

As described above, the MAC address allocation apparatus provided in this embodiment of this application may be configured to implement functions in the methods implemented in the foregoing embodiments of this application. For ease of description, only parts related to this embodiment of this application are shown. For undisclosed specific technical details, refer to the embodiments of this application. Details are not described herein again.

An embodiment of this application further provides a computer-readable storage medium. The computer-readable storage medium stores instructions. When the instructions are executed, the MAC address allocation method in the foregoing method embodiment is performed.

An embodiment of this application further provides a computer program product including instructions. When the computer program product is run on a computer, the computer is enabled to perform the MAC address allocation method in the foregoing method embodiment.

An embodiment of this application further provides a chip system. The chip system includes a processor, configured to implement the technical methods in the embodiments of this application. In a possible design, the chip system further includes a memory, configured to store program instructions and/or data necessary for the embodiments of this application, so that the processor invokes the application program code stored in the memory to implement the MAC address allocation method provided in this application. The chip system may include one or more chips, or may include a chip and another discrete device. This is not specifically limited in this embodiment of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

When the functions are implemented in the form of a software function unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for indicating a computer device (which may be a personal computer, a server, or a network device) to perform all or a part of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application.

## Claims

1. A media access control (MAC) address allocation method, wherein the method comprises:
sending, by a wireless controller, at least one MAC address to a wireless access point device, wherein the at least one MAC address is in a MAC address pool, and the MAC address pool comprises a plurality of MAC addresses; and
receiving, by the wireless controller, a request message sent by the wireless access point device, wherein the request message comprises a first virtual MAC address of a terminal device, and the first virtual MAC address is one of the at least one MAC address.

2. The MAC address allocation method according to claim 1, wherein the method further comprises:
allocating, by the wireless controller, the first virtual MAC address to the terminal device in response to the request message.

3. The MAC address allocation method according to claim 2, wherein the method further comprises:
if the first virtual MAC address is occupied, discarding, by the wireless controller, the request message.

4. The MAC address allocation method according to claim 3, wherein the method further comprises:
allocating, by the wireless controller, an unoccupied second virtual MAC address to the terminal device, wherein the second virtual MAC address is one of the plurality of MAC addresses.

5. The MAC address allocation method according to any one of claims 2 to 4, wherein the method further comprises:
if the wireless controller determines that the terminal device is disconnected from a wireless network, retrieving, by the wireless controller, the first virtual MAC address.

6. The MAC address allocation method according to claim 1, wherein the method further comprises:
authorizing, by the wireless controller, the wireless access point device to allocate the at least one MAC address.

7. The MAC address allocation method according to claim 6, wherein the method further comprises:
in response to the request message, recording, by the wireless controller, that the first virtual MAC address is allocated to the terminal device.

8. The MAC address allocation method according to claim 6 or 7, wherein
if the wireless controller determines that the terminal device is disconnected from a wireless network, retrieving, by the wireless controller, the first virtual MAC address, and notifying the wireless access point device that the first virtual MAC address is retrieved.

9. The MAC address allocation method according to any one of claims 1 to 8, wherein the plurality of MAC addresses are different from each other.

10. A media access control (MAC) address allocation method, wherein the method comprises:
sending, by a wireless access point device, a notification message on a wireless medium, wherein the notification message comprises at least one candidate virtual MAC address; and
receiving, by the wireless access point device on the wireless medium, a request message sent by a terminal device, wherein a source address of the request message is a first virtual MAC address, and the first virtual MAC address is one of the at least one candidate virtual MAC address.

11. The MAC address allocation method according to claim 10, wherein the method further comprises:
allocating, by the wireless access point device, the first virtual MAC address to the terminal device.

12. The MAC address allocation method according to claim 10 or 11, wherein the method further comprises:
if the first virtual MAC address is occupied, discarding, by the wireless access point device, the request message.

13. The MAC address allocation method according to claim 12, wherein the method further comprises:
allocating, by the wireless access point device, an unoccupied second virtual MAC address to the terminal device, wherein the second virtual MAC address is one of a plurality of candidate virtual MAC addresses, and the plurality of candidate virtual MAC addresses comprise the at least one candidate virtual MAC address.

14. The MAC address allocation method according to claim 10, wherein the method further comprises:
requesting, by the wireless access point device, a wireless controller to allocate the first virtual MAC address to the terminal device.

15. The MAC address allocation method according to any one of claims 10 to 13, wherein the method further comprises:
responding, by the wireless access point device, to an indication of the wireless controller, and marking the first virtual MAC address as unoccupied.

16. The MAC address allocation method according to any one of claims 10 to 15, wherein the notification message is a beacon frame.

17. A media access control (MAC) address allocation apparatus, wherein the apparatus comprises:
a sending unit, configured to send at least one MAC address to a wireless access point device, wherein the at least one MAC address is in a MAC address pool, and the MAC address pool comprises a plurality of MAC addresses; and
a receiving unit, configured to receive a request message sent by the wireless access point device, wherein the request message comprises a first virtual MAC address of a terminal device, and the first virtual MAC address is one of the at least one MAC address.

18. A media access control (MAC) address allocation apparatus, wherein the apparatus comprises:
a sending unit, configured to send a notification message on a wireless medium, wherein the notification message comprises at least one candidate virtual MAC address; and
a receiving unit, configured to receive, on the wireless medium, a request message sent by a terminal device, wherein a source address of the request message is a first virtual MAC address, and the first virtual MAC address is one of the at least one candidate virtual MAC address.

19. A wireless controller, wherein the wireless controller comprises a processor and a memory; and
the memory is connected to the processor, the memory is configured to store computer instructions, and when the processor executes the computer instructions, the wireless controller performs the MAC address allocation method according to any one of claims 1 to 9.

20. A wireless access point device, wherein the wireless access point device comprises a processor, a transceiver, and a memory; and
the memory is connected to the processor, the transceiver is configured to support communication between the wireless access point device and another device, the memory is configured to store computer instructions, and when the processor executes the computer instructions, the wireless access point device performs the MAC address allocation method according to any one of claims 10 to 16.

21. A (MAC) address allocation system, wherein the MAC address allocation system comprises the wireless controller according to claim 19 and the wireless access point device according to claim 20.

22. A computer program product, wherein when the computer program product is run on a computer, the computer is enabled to perform the MAC address allocation method according to any one of claims 1 to 9 or any one of claims 10 to 16.
